# EUROPEAN PATENT APPLICATION

(11) **EP 1 259 076 A2**
(43) Date of publication of application: **20.11.2002**
(21) Application number: 02010968.2
(22) Date of filing: 16.05.2002
(51) Int. Cl.: H04N 7/18

(54) **Remote monitoring system**

(30) Priority: 16.05.2001 JP 2001146196
(71) Applicant: MATSUSHITA ELECTRIC INDUSTRIAL CO., LTD., Kadoma-shi, Osaka 571-8501 (JP)
(72) Inventor: Arakawa, Hiroshi, Kyoto-shi, Kyoto 612-8136 (JP); Itoh, Tomoaki, Kawasaki-shi, Kanagawa 214-0036 (JP); Sato, Junichi, Nara-shi, Nara 631-0801 (JP); Yamaguchi, Takao, Machida-shi, Tokyo 194-0041 (JP)
(74) Representative: Grünecker, Kinkeldey, Stockmair & Schwanhäusser Anwaltssozietät

(57) **Abstract**

Cameras respectively installed at a plurality of homes and a monitoring center of a security service provider for centralized monitoring are connected together via a network. Each camera, which has a programmable internal module configuration, acquires from a module control center a program module for executing, based on video data about a target for monitoring, a recognition process for detection of the occurrence of abnormal events to the monitored target, and link information about the program module, as required.

## Description

### BACKGROUND OF THE INVENTION

The present invention relates to a remote monitoring system making use of a monitoring camera.

Japanese Patent *Kokai* Publication Gazette No. H11-112674 discloses a remote monitoring system making utilization of a communications line. According to the remote monitoring system, a computer installed at a location to be monitored, and another computer installed on the side of a central monitoring station are connected together via the communications line. Besides, in order to increase the efficiency of monitoring operations, and in order to provide a surveillant with immediate verification of the occurrence of abnormal events, it is arranged such that an abnormal condition, if occurs to a target for monitoring, is detected at the monitored location based on the interframe differences of video signals acquired by the monitoring camera, and compression-coded video data are transmitted to the surveillant, only at the time of detection of the occurrence of abnormal events.

However, this conventional technique has the disadvantage of not being able to change an abnormality detection algorithm, depending on the type of target for monitoring. For example, for the case of housebreaker monitoring, it is necessary to change the abnormality detection algorithm depending on the camera installation location. For example, a camera installed at the front door having many visitors and a camera installed by a window require different abnormality detection algorithms. Further, the object recognition function of cameras depends largely on the lighting condition. For the case of expressway traffic jam monitoring, it is desirable to be able to change the abnormality detection algorithm, depending on the weather as well as on the hour.

### SUMMARY OF THE INVENTION

Accordingly, an object of the present invention is to make it possible to change, without difficulties, an abnormality detection algorithm of a remote monitoring system making use of a monitoring camera.

In order to achieve the object, the present invention is characterized by a monitoring camera (i.e., an image acquisition means) for acquiring images of a target for monitoring, and the image acquisition means comprises: a transmitting part for transmitting video data about the monitored target: a receiving part for receiving function change information; and a module control part for changing, according to the function change information, a programmable internal module configuration. The function change information includes information which specifies a program module for realizing a function of the image acquisition means, and link information about the program module.

### BRIEF DESCRIPTION OF THE DRAWINGS

Figure **1** is a conceptual diagram showing an arrangement of a remote monitoring system of the present invention.
Figure **2** is a block diagram showing an example of an initial module configuration of a camera shown in Figure **1.**
Figure **3** is a block diagram showing a module configuration updated of a camera shown in Figure **2**.
Figure **4** is a conceptual diagram showing an example of function change information that the camera of Figure **2** receives from a module control center.

### DETAILED DESCRIPTION OF THE INVENTION

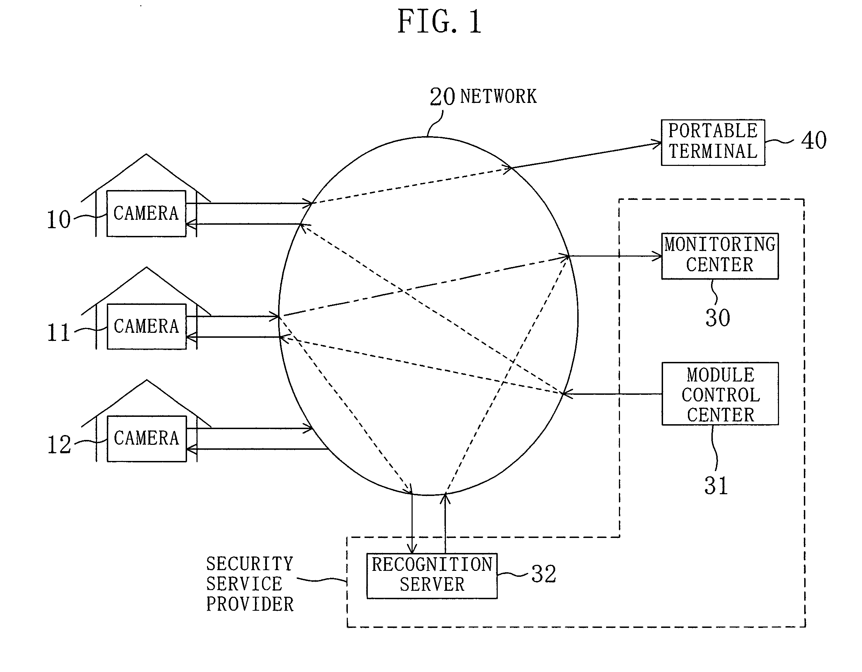

Referring first to Figure **1**, there is shown an exemplary arrangement of a remote monitoring system relating to the present invention. This remote monitoring system is based on the condition that a security service provider (hereinafter SSP) provides security services (e.g., housebreaker monitoring, fire alarming and so on) to a plurality of homes under contract therewith. More specifically, monitoring cameras **10, 11,** and **12** installed at the respective homes and a monitoring center **30** of the SSP for centralized monitoring are connected together via a network **20.** The network **20** comprises for example public lines. Each camera **10, 11,** and **12** has, in addition to a function of acquiring images of a target for monitoring, a function of transmitting video data and a function of receiving information sent from the SSP. In the Figure, two lines are drawn between each camera **10, 11,** and **12** and the network **20**, but these two lines are shown just to indicate the fact that data will flow in both directions, for the sake of descriptive convenience. In practice, each camera **10, 11,** and **12** and the network **20** are physically connected together via a single cable. The monitoring center **30** is equipped with a system by which video data received are displayed on a monitor screen so that a surveillant can perform monitoring work. In the system of Figure **1,** a user who is a resident in a home equipped with the particular camera **10** is allowed to receive video data about his/her home by establishing connection between his/her portable terminal **40** and the network **20.**

The cameras **10, 11,** and **12** of Figure **1** have programmable internal module configurations, respectively, and these internal module configurations are changeable according to function change information transmitted from a module control center **31** of the SSP. And the internal module configuration of each camera **10, 11,** and **12** is determined on a contract basis between each user and the SSP. Further, in the system of Figure **1,** a recognition server **32** of the SSP is also connected to the network **20**. The recognition server **32** is a processor having a function of executing, based on video data about a target for monitoring transmitted from any of the cameras **10, 11,** and **12,** a recognition process for detection of the occurrence of abnormal events to the monitored target.

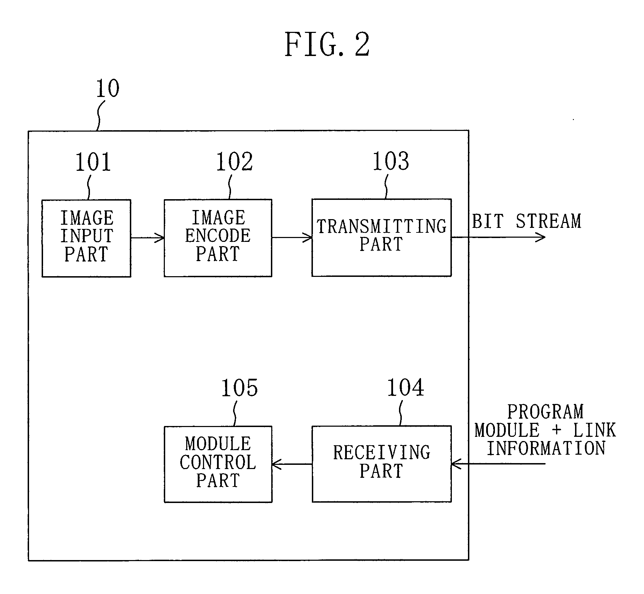

Referring now to Figure **2,** there is shown an example of an initial module configuration of the camera **10** of Figure **1.** The other cameras **11** and **12** of Figure **1** have the same initial module configuration as that of the camera **10**. The camera **10** of Figure **2** has a programmable module configuration comprising, as its basic hardware, a CCD (Charge Coupled Device) image pickup device, an image processor, and a modem. Figure **2** represents a hardware/software configuration of the camera **10** in the form of a functional block diagram. Mounted between modules constituting the camera **10** is an IPC (InterProcess Communication) that is equivalent to a buffer memory for data exchange.

The camera **10** of Figure **2** has an initial module configuration comprising an image input part **101**, an image encode part **102,** a transmitting part **103,** a receiving part **104,** and a module control part **105**. The image input part **101** is a module comprising a CCD image pickup device as a core element and outputs a video signal of an NTSC (National Television Standards Committee) format. The image encode part **102** receives the video signal from the image input part **101** and compression encodes it by using for example an MPEG (Moving Picture Coding Experts Group) technique, to generate a bit stream which is video data. The transmitting part **103** receives the bit stream from the image encode part **102** for transmitting to the network **20.** For example, a protocol called UDP (User Datagram Protocol) of the TCP (Transmission Control Protocol)/IP (Internet Protocol) is available. A known payload format for MPEG1 transmission may be used for video data packetization (D. Hoffman et al., "RTP Payload Format for MPEG1/MPEG2 Video", RFC 2250, Internet Engineering Taskforce, Jan. 1998).

The receiving part **104** of Figure **2** is a module for receiving function change information transmitted from the module control center **31.** The function change information contains information which specifies a program module for realizing a function of the camera **10,** and link information about the program module. The link information is information indicative of connecting relationships of the input and the output of the program module. The link information describes not only an intermodule connecting relationship within the camera **10** but also an intermodule connecting relationship via the network **20.** The module control part **105** is a module for changing a programmable internal module configuration according to function change information and has a function of establishing connection between a program module received and the existing program module and a function of activating such program modules.

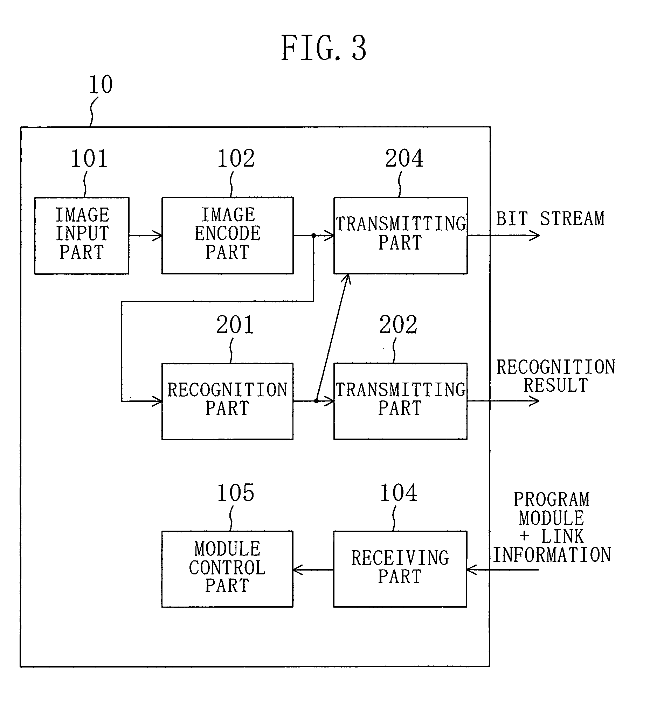

Referring now to Figure **3**, there is shown a module configuration updated of the camera **10** of Figure **2.** Here, a recognition part **201** and a first transmitting part **202** are added, and the transmitting part **103** is replaced by a second transmitting part **204**. This will be described in greater detail. The receiving part **104** first receives information specifying a program module of the recognition part **201,** and link information indicating that an input to the recognition part **201** is an output from the image encode part **102.** Subsequently, the receiving part **104** receives information specifying a program module of the first transmitting part **202,** and link information indicating that an input to the first transmitting part **202** is an output from the recognition part **201.** The receiving part **104** further receives information specifying a program module of the second transmitting part **204** as a substitute of the original transmitting part **103,** and information indicating that inputs to the second transmitting part **204** are outputs from the image encode part **102** and from the recognition part **201,** respectively. The module control part **105** establishes connection between each module according to these information pieces received.

The recognition part **201** of Figure **3** is a module capable of executing, based on video data about the monitored target, a recognition process for detection of the occurrence of abnormal events to the monitored target. For example, the recognition part 201 extracts a motion vector from a bit stream generated in the image encode part **102,** and if there is an excessive movement in a local area, the recognition part **201** outputs VALUE 1 indicative of detection of a moving object in the local area, otherwise VALUE 0 is output. Further, the degree of similarity between a color within the local area and the color of human skin is found and is output in combination with a moving object detection, as a vector.

The first transmitting part **202** is a module for transmitting to the network **20** a result of the recognition process executed by the recognition part **201.** If, in addition to images of the monitored target, the recognition process result is presented to the surveillant at the monitoring center **30,** this allows the surveillant to acquire guide information about the object to be watched carefully. This therefore makes it possible to reduce the labor of the surveillant.

The second transmitting part **204** is a module for transmitting, after reducing video data about the monitored target received from the image encode part **102,** it to the network **20,** during the time that no occurrence of an abnormal event to the monitored target is detected. For example, at the time of detection of a moving object (VALUE 1) as described above, all the bit streams including a P (Predictive) picture and a B (Bidirectionally predictive) picture are transmitted without reduction, while at the time of non-detection of a moving object (VALUE 0) only a bit stream corresponding to an I (Intra) picture is transmitted. Stated another way, there is made a distinction between an abnormal condition and a normal condition, and if an abnormal condition is detected, then video data are transmitted at a high frame rate, whereas if a normal condition is detected, then video data are transmitted at a low frame rate. This arrangement makes it possible to reduce the amount of transmitting video data in the normal condition while maintaining the frame rate in the abnormal condition. Alternatively, an arrangement, which distinguishes between the use of high resolution in an abnormal condition and the use of low resolution in a normal condition, may be made. Further, there is a certain time delay in the output of the recognition part **201,** because of which the second transmitting part **204** buffers the bit streams until the time it receives an output from the recognition part **201** corresponding to a particular image frame.

The functions of the recognition part **201,** the first transmitting part **202,** and the second transmitting part **204** (Figure **3**) may be transferred to the recognition server **32** (Figure **1**). Here, the camera **11** of Figure **1,** while maintaining its initial module configuration (Figure **2**), changes a destination to which bit streams are sent, from the monitoring center **30** to the recognition server **32** according to function change information sent from the module control center **31.** This also provides the same effects as those achieved by the camera **10** haying an updated module configuration of Figure **3.** The single recognition server **32** may be time-shared between the plural cameras **10, 11,** and **12.**

As has been described above, the remote monitoring system (Figure **1**) makes it possible to freely change an abnormality detection algorithm in the recognition part **201,** depending upon the place where the monitoring cameras **10, 11,** and **12** are installed and their lighting condition. Further, even when there is made a change in the contract between a user and the SSP from "NOT REQUIRING ABNORMALITY DETECTION SERVICE" to "REQUIRING ABNORMALITY DETECTION SERVICE", it is possible to send a program module of the recognition part **201** to the camera **10**. Furthermore, the remote monitoring system of Figure **1** is able to easily deal with such a case that, despite the development of a new abnormality detection algorithm, video data are still transferred intact to the recognition server **32** because the load is too high for the processing capabilities of older cameras.

Further, it may be arranged such that the recognition server **32** is provided with a module control part **105** as shown in Figure **2** and changes an internal module configuration according to function change information sent from the module control center **31.** Furthermore, it may be arranged such that each camera **10, 11,** and **12** and the recognition server **32** share a part of a recognition process for detection of the occurrence of abnormal events to the monitored target.

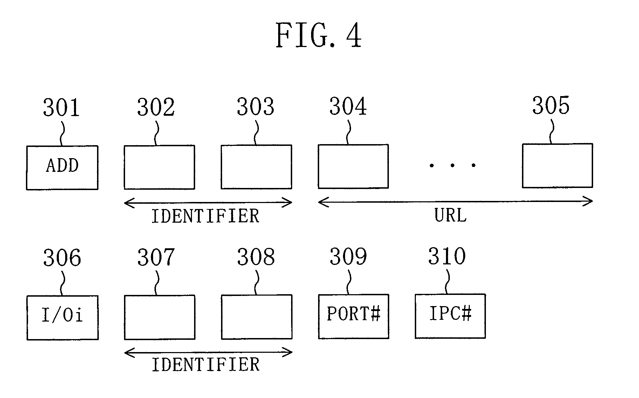

Finally, an example of a transmission format of the function change information will be described. Referring to Figure **4,** there is shown an example of function change information that the camera **10** of Figure **2** receives from the module control center **31,** more specifically information specifying a program module of the recognition part **201** and link information indicating that an input to the recognition part **201** is an output from the image encode part **102.** Elements **301-310** each represent one byte. These bytes, when arranged in an ascending order of these reference numbers, are a transfer format. There exist bytes (not shown in the Figure) between the bytes **304** and **305.**

**301** of Figure **4** is a byte representing a module addition command and is followed by the two bytes **302** and **303** representing an identifier and then by the bytes **304** and **305** representing a variable-length character string. The recognition part **201** is specified by the identifiers **302** and **303** and the subsequent character string specifies an URL (Uniform Resource Locator) for acquiring a program module of the recognition part **201. 305** is a byte comprised only of bits of 0 value and specifying the end of the character string. The receiving part **104** has a function of acquiring, based on an URL specified, an entity of a program module to be added. **306** is a byte representing a command relating to input link information (I/Oi). The module control part **105** is operable to bring an IPC specified by **310** into link with an input port (i.e., an input port having a port number specified by **309**) of a module specified by the identifiers 307 and **308** (i.e., the recognition part **201**). This IPC in this case is an IPC on the output side of the image encode part **102.**

Further, module deletion commands, module replacement commands, commands relating to output link information, and so forth may be used. Arguments at the time of activation of each program module may be included in function change information. Further, without making utilization of URL a program module entity may be included in the aforementioned transmission format. It may be arranged such that the module control center **31** prepares, in the form of a time table, function change information to be transmitted in order. It may be arranged such that the transmission or receiving history of information transmitted between each camera **10, 11**, and **12** and the recognition server **32,** and the module control center **31** is stored for future utilization.

## Claims

1. A remote monitoring system implemented by connecting, via a communications line, image acquisition means for acquiring images of a target for monitoring and a system installed on the side of a central monitoring station,
said image acquisition means comprising:
a transmitting part for transmitting video data about said monitored target,
a receiving part for receiving function change information, and
a module control part for changing, according to said function change information, a programmable internal module configuration.

2. The remote monitoring system of claim 1, wherein said function change information includes information which specifies a program module for realizing a function of said image acquisition means, and link information about said program module.

3. The remote monitoring system of claim 2, wherein said program module includes a module which executes, based on said video data about said monitored target, a recognition process for detection of the occurrence of abnormal events to said monitored target.

4. The remote monitoring system of claim 3, wherein said image acquisition means has, in addition to said function of transmitting said video data about said monitored target, a function of transmitting a result of said recognition process.

5. The remote monitoring system of claim 3, wherein said image acquisition means has a function of transmitting, after reducing said video data about said monitored target, it during the time that no occurrence of an abnormal event to said monitored target is detected.

6. The remote monitoring system of claim 1 further comprising:
a recognition system connected to said communications line,
wherein said recognition system has a function of executing, based on said video data about said monitored target sent from said image acquisition means, a recognition process for detection of the occurrence of abnormal events to said monitored target.

7. The remote monitoring system of claim 6, wherein said recognition system has, in addition to said function of transmitting said video data about said monitored target, a function of transmitting a result of said recognition process.

8. A camera for use in a remote monitoring system for acquiring images of a target for monitoring, said camera comprising:
a transmitting part for transmitting video data about said monitored target,
a receiving part for receiving function change information, and
a module control part for changing, according to said function change information, a programmable internal module configuration.
